# EUROPÄISCHE PATENTANMELDUNG

(11) **EP 4 386 976 A1**
(43) Veröffentlichungstag der Anmeldung: **19.06.2024**
(21) Anmeldenummer: 23193905.9
(22) Anmeldetag: 29.08.2023
(51) Int. Cl.: H01P 3/12, H02G 5/06

(54) **SAMMELSCHIENE MIT HOHLLEITER, ELEKTRISCHES VERSORGUNGSSYSTEM UND LUFTFAHRZEUG**

(30) Priorität: 14.12.2022 DE 102022133284
(71) Anmelder: Airbus Operations GmbH, 21129 Hamburg (DE)
(72) Erfinder: BENTHIEN, Hermann, 21129 Hamburg (DE); HEGENBART, Matthias, 21129 Hamburg (DE)
(74) Vertreter: Isarpatent

(57) **Zusammenfassung**

Die vorliegende Erfindung schafft eine Sammelschiene (100) mit einem Hohlleiter (110); einem Gehäuse (120); und einer Vielzahl an in dem Gehäuse (120) angeordneten Leiterschienen (130); wobei die Sammelschiene (100) eine längliche Form aufweist, wobei der Hohlleiter (110) entlang der Sammelschiene (100) einen Hohlraum (111) definiert, in welchem sich elektromagnetische Wellen im Wesentlichen verlustfrei ausbreiten können, und wobei der Hohlleiter (110) mindestens eine Öffnung (112) aufweist, durch welche der Hohlraum (111) zugänglich ist. Des Weiteren schafft die vorliegende Erfindung ein elektrisches Versorgungssystem und ein Luftfahrzeug.

## Beschreibung

### TECHNISCHES GEBIET DER ERFINDUNG

Die vorliegende Erfindung betrifft eine Sammelschiene mit einem Hohlleiter, ein elektrisches Versorgungssystem, sowie ein Luftfahrzeug.

### HINTERGRUND DER ERFINDUNG

In Luftfahrzeugen wird ein möglichst geringes Gewicht der Gesamtkonstruktion angestrebt. Zusätzlich finden sich in Luftfahrzeugen auch eine Vielzahl an elektronischen Komponenten, welche zum einen mit Energie als auch mit Steuersignalen versorgt werden müssen. Hierfür sind derzeit generell Kabelverbindungen vorgesehen, welche aufgrund der hohen Anzahl an benötigten Kabeln wesentlich zum Gesamtgewicht des Luftfahrzeugs beitragen.

### ZUSAMMENFASSUNG DER ERFINDUNG

Vor diesem Hintergrund liegt der vorliegenden Erfindung die Aufgabe zu Grunde, die benötigte Anzahl an Kabeln in einer Konstruktion, insbesondere einem Luftfahrzeug, zu reduzieren.

Diese Aufgabe wird gelöst durch eine Sammelschiene mit den Merkmalen des Patentanspruchs 1, ein elektrisches Versorgungssystem mit den Merkmalen des Patentanspruchs 8 sowie durch ein Luftfahrzeug mit den Merkmalen des Patentanspruchs 9.

Dementsprechend ist nach einem ersten Aspekt der Erfindung eine Sammelschiene mit einem Hohlleiter, einem Gehäuse und einer Vielzahl an in dem Gehäuse angeordneten Leiterschienen vorgesehen. Die Sammelschiene weist eine längliche Form auf. Der Hohlleiter definiert entlang des Bauteils einen Hohlraum, in welchem sich elektromagnetische Wellen im Wesentlichen verlustfrei ausbreiten können. Der Hohlleiter weist weiterhin mindestens eine Öffnung auf, durch welche der Hohlraum zugänglich ist.

Nach einem zweiten Aspekt der Erfindung ist ein elektrisches Versorgungssystem mit einer erfindungsgemäßen Sammelschiene und einer Vielzahl an Transceivern vorgesehen. Die Transceiver sind derart an de Sammelschiene befestigt, dass jeder der Vielzahl an Transceivern elektromagnetische Wellen in den Hohlraum einspeisen kann und/oder sich in dem Hohlraum ausbreitende elektromagnetische Wellen empfangen kann.

Nach einem weiteren Aspekt der Erfindung ist ein Luftfahrzeug mit mindestens einer erfindungsgemäßen Sammelschiene oder mindestens einem erfindungsgemäßen elektrischen Versorgungssystem vorgesehen.

Eine der Ideen der vorliegenden Erfindung besteht darin, elektromagnetische Wellen als Datenübertragungsmedium zu verwenden.

Eine Verwendung von elektromagnetischen Wellen zu kabellosen Übertragung von Steuersignalen ist prinzipiell dazu geeignet, Kabel und damit Gewicht einzusparen. Eine freie Ausbreitung elektromagnetischer Wellen sollte jedoch vermieden werden, da hierdurch die Möglichkeit besteht, dass elektronische Komponenten durch nicht für sie gedachte Signale beeinflusst werden könnten. Durch die Verwendung eines Hohlleiters, in welchem sich die elektromagnetischen Wellen verlustfrei ausbreiten ohne in die Umgebung zu entkommen unterbindet solche Quereinflüsse. Die Verwendung von Sammelschienen zur Versorgung von elektronischen Bauteilen, welche insbesondere in Luftfahrzeugen an vielen Stellen bereits vorgesehen werden ergibt den synergistischen Effekt, dass die Hohlleiter angeordnet werden können, ohne weitere, das Gewicht erhöhende, Bauteile zu benötigen.

Gemäß einer Weiterbildung sind der Hohlleiter und/oder eine Teilbereich des Gehäuses aus Metall oder einem mit einem Metall überzogenen Verbundbaustoff gefertigt. Diese Materialien besitzen jeweils eigene vorteilhafte Aspekte, welche in den detaillierten Ausführungsformen der Figuren näher erläutert werden.

Gemäß eines weiteren Ausführungsbeispiels des Bauteils wird mindestens eine den Hohlraum definierende Wand des Hohlleiters durch einen Teilbereich des Gehäuses gebildet. Hierdurch lässt sich vorteilhaft synergistisch Material einsparen und das Gewicht der Sammelschiene noch weiter reduzieren.

Gemäß eines weiteren Ausführungsbeispiels des Bauteils ist die mindestens eine Öffnung als Schlitz ausgebildet, welcher sich in Längsrichtung entlang des Hohlleiters erstreckt. Hierdurch ergibt sich die vorteilhafte Möglichkeit, die letztendliche Position von Transceivern zur Datenübertragung völlig frei zu wählen. Gemäß eines weiteren Ausführungsbeispiels weist die Sammelschiene weiterhin mindestens ein Versteifungselement auf, welches dazu ausgebildet ist, eine strukturelle Integrität einer das Bauteil umfassenden Struktur zu verstärken. Hierdurch ergibt sich der zusätzliche synergistische Effekt, dass mittels der Sammelschiene die Steifigkeit der Komponenten des Luftfahrzeugs verbessert werden kann, wodurch andere, explizit nur für diesen Zweck vorgesehene Bauteile eingespart werden können.

Gemäß eines weiteren Ausführungsbeispiels weist das Gehäuse eine Anschlusseinrichtung für eine Stromabnehmereinrichtung aufweist und der Hohlleiter an einer der Anschlusseinrichtung gegenüberliegenden Seite des Gehäuses angeordnet ist. Durch diese Anordnung kann die Sammelschiene vorteilhaft platzsparen verbaut werden.

Gemäß einer Weiterbildung weist die Sammelschiene mindestens eine Befestigungseinrichtung auf, mit welcher sich ein Transceiver derart an der Sammelschiene befestigen lässt, dass der Transceiver elektromagnetische Wellen in den Hohlraum einspeisen kann und/oder sich in dem Hohlraum ausbreitende elektromagnetische Wellen empfangen kann. Hierdurch wird die spätere Anbringung von Transceivern zur Datenübertragung vorteilhaft vereinfacht.

In einem Ausführungsbeispiel des Luftfahrzeugs ist die mindestens eine Sammelschiene mit einem Rumpf, einem Kabinenboden und/oder mindestens einem Flügel des Luftfahrzeugs verbunden. Entlang dieser Strukturelemente eines Luftfahrzeugs sind in der Regel eine Vielzahl von Kabeln und ähnlichem zur Versorgung elektronischer Komponenten vorgesehen, was die Anordnung einer Sammelschiene an diesen Stellen besonders synergistisch vorteilhaft macht.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: eine schematische Darstellung eines Luftfahrzeugs gemäß eines Ausführungsbeispiels der vorliegenden Erfindung;
- Fig. 2a: eine schematische Draufsicht einer Sammelschiene gemäß eines Ausführungsbeispiels der vorliegenden Erfindung;
- Fig. 2b: eine schematische Querschnittansicht der Sammelschiene gemäß des Ausführungsbeispiels in Fig. 2a;
- Fig. 3: eine schematische Querschnittansicht einer Sammelschiene gemäß einer Ausführungsform der vorliegenden Erfindung;
- Fig. 4a: eine schematische Draufsicht eines elektrischen Versorgungssystems gemäß eines Ausführungsbeispiels der vorliegenden Erfindung; und
- Fig. 4b: eine schematische Querschnittansicht des elektrischen Versorgungssystems gemäß des Ausführungsbeispiels in Fig. 4a.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

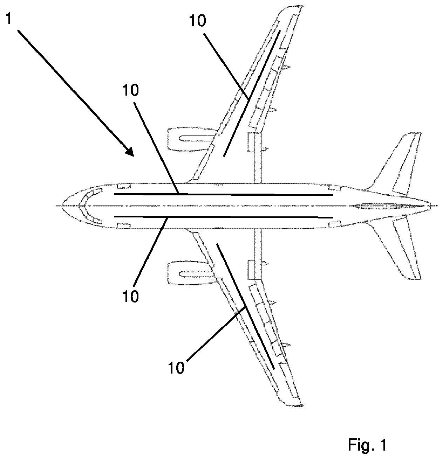

Fig. 1 zeigt eine schematische Darstellung eines Luftfahrzeugs 1 gemäß eines Ausführungsbeispiels der vorliegenden Erfindung.

Das in Figur 1 gezeigte Luftfahrzeug 1 weist eine Vielzahl von elektrischen Versorgungssystemen 10 auf, von denen insgesamt vier gezeigt sind. Zwei elektrische Versorgungssysteme 10 verlaufen hierbei entlang des Rumpfes des Luftfahrzeugs 1 und jeweils ein elektrisches Versorgungssystem 10 verläuft längs jedes der Flügel des Luftfahrzeugs 1.

Die Positionen der in Figur 1 gezeigten elektrischen Versorgungssysteme 10 deuten an, an welchen Stellen in einem Luftfahrzeug beispielsweise elektrische Leitungen angeordnet sein können. An diesen Stellen können also auch erfindungsgemäße elektrische Versorgungssysteme Anwendung finden um die im allgemeinen Teil beschriebenen synergistischen Effekte der vorliegenden Erfindung bestmöglich nutzen zu können.

Bei dem in Figur 1 gezeigten Luftfahrzeug sind elektrische Versorgungssysteme 10 genannt. Es ist allerdings auch denkbar, dass ein Luftfahrzeug 1 lediglich erfindungsgemäße Sammelschienen aufweist, falls etwa durch das Hinzufügen von Transceivern, die Bauteile erst nachträglich zu elektrischen Versorgungssystemen ergänzt werden sollen.

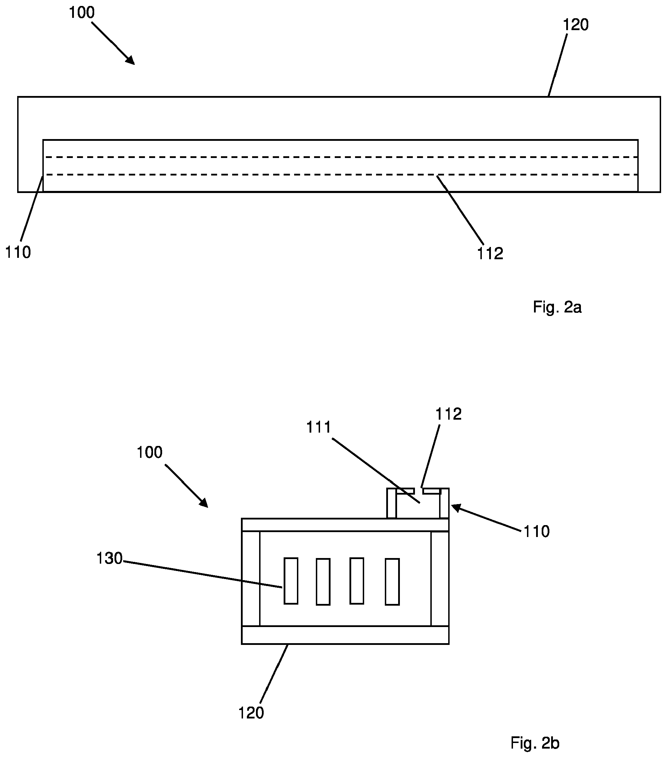

Fig. 2a und 2b zeigen schematische Darstellungen einer Sammelschiene 100 gemäß eines Ausführungsbeispiels der vorliegenden Erfindung, wobei Fig. 2a eine Draufsicht und Fig. 2b eine Querschnittsansicht der Sammelschiene 100 zeigt.

Die Sammelschiene 100 ist mit einer länglichen Form ausgebildet und weist einen Hohlleiter 110, ein Gehäuse 120 und eine Vielzahl an in dem Gehäuse angeordneten Leiterschienen 130 auf. Der Hohlleiter 110 ist an einer oberen Seite des Gehäuses 120 angeordnet, definiert einen Hohlraum 111 und weist eine Öffnung 112 auf.

Der Hohlleiter 110 umfasst zwei Schienen, welche rechtwinklig abgeknickt sind und zusammen mit einem Teilbereich des Gehäuses 120 einen rechteckigen Rahmen definieren, durch den der Hohlraum 111 definiert wird. Die Öffnung 112 ist in dem gezeigten Ausführungsbeispiel als nach oben geöffneter Spalt ausgebildet, welcher sich entlang des Hohlleiters 110 erstreckt.

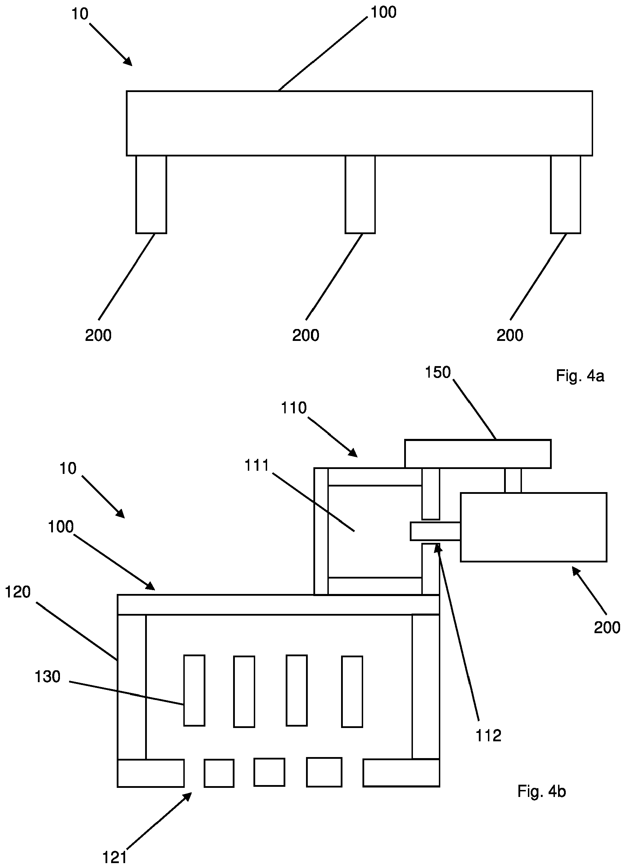

Durch Auswahl geeigneter Materialien der Sammelschiene, insbesondere des Hohlleiters 110 und aller Teilbereiche des Gehäuses 120, welche dazu beitragen den Hohlraum 111 zu definieren, wird ermöglicht, dass sich elektromagnetische Wellen innerhalb des Hohlraums verlustfrei ausbreiten können. Unter "verlustfrei" ist hier zu verstehen, dass zum einen die Intensität der elektromagnetischen Wellen bei der Ausbreitung durch den Hohlleiter nicht abnimmt, aber auch zugleich, dass kein Anteil der sich ausbreitenden elektromagnetischen Wellen sich außerhalb des Hohlleiters ausbreitet. Durch geeignete Ausbildung der Ausmaße der Öffnung 112, kann dies gewährleistet werden und gleichzeitig ein Zugang zum Hohlraum 111 für etwa Transceiver ermöglicht werden, wie in Bezug auf die Fig. 4a und 4b näher erläutert.

Als Materialien für den Hohlleiter 110 bzw. das Gehäuse 120 sind beispielsweise Metalle und mit Metall überzogene Verbundbaustoffe besonders vorteilhaft. Reine Metalle lassen sich vorteilhaft leicht formen, was den Fertigungsprozess der Sammelschiene 100 erleichtert. Insbesondere wenn der Hohlleiter 110 als separates Element ausgebildet wird, welches mit dem Rest der Sammelschiene 100 nach dessen Fertigung verbunden wird. Mit Metall überzogene Verbundbaustoffe weisen ein vorteilhaft geringes Gewicht auf.

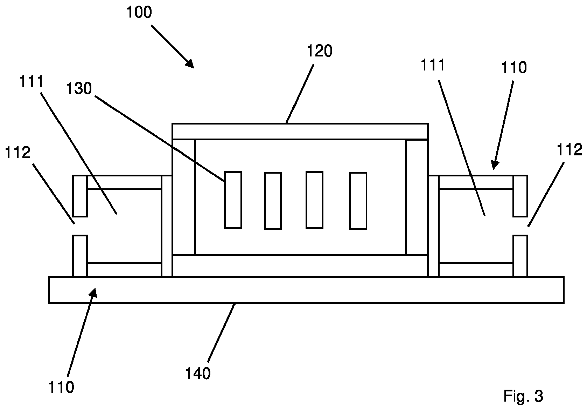

Fig. 3 zeigt eine schematische Querschnittansicht einer Sammelschiene 100 gemäß eines Ausführungsbeispiels der vorliegenden Erfindung.

Die Sammelschiene 100 weist zwei Hohlleiter 110, ein Gehäuse 120, eine Vielzahl an in dem Gehäuse 120 angeordneten Leiterschienen 130, sowie ein Versteifungselement 150 auf. Die Hohlleiter 110 sind jeweils an einer Seite des Gehäuses 120 angeordnet und weist jeweils einen rechteckigen Rahmen auf, durch welchen der jeweilige Hohlraum 111 definiert wird. Die jeweiligen Öffnungen 112 sind zu den jeweiligen Seite hin ausgebildet. Das Versteifungselement 140 ist als eine an einer unteren Seite des Gehäuses 120 angeordneten Platte ausgebildet.

Das Versteifungselement 140 kann an einer Oberfläche einer Struktur befestigt werden. Daraus resultiert eine lokal höhere Dicke der sich daraus ergebenden Gesamtstruktur, welche daher an dieser Stelle eine höhere Steifigkeit aufweist.

Fig. 4a und 4b zeigen schematische Darstellungen eines elektrischen Versorgungssystems 10 gemäß eines Ausführungsbeispiels der vorliegenden Erfindung, wobei Fig. 4a eine Draufsicht und Fig. 4b eine Querschnittsansicht des elektrischen Versorgungssystems 10 zeigt.

Das elektrische Versorgungssystem 10 weist eine Sammelschiene 100 und eine Vielzahl an Transceivern 200 auf. In dem hier gezeigten Ausführungsbeispiel sind insgesamt drei Transceiver 200 vorgesehen, zwei Transceiver 200 jeweils an den Enden der Sammelschiene 100 und ein Transceiver 200 an einer zentralen Stelle. Die Sammelschiene 100 weist einen Hohlleiter 110, ein Gehäuse 120 und eine Vielzahl an in dem Gehäuse 120 angeordneten Leiterschienen 130 auf. Der Hohlleiter 110 ist an einer oberen Seite des Gehäuses 120 angeordnet und weist einen rechteckigen Rahmen auf, durch welchen der Hohlraum 111 definiert wird. Die mindestens eine Öffnung 112 ist zu einer rechten Seite hin ausgebildet. Aus den Darstellungen der Figuren 4a und 4b geht nicht eindeutig hervor, wie die mindestens eine Öffnung 112 ausgebildet ist. Es ist möglich, dass wie in dem Ausführungsbeispiel der Figuren 2a und 2b ein einzelner Spalt vorgesehen ist. Es ist aber auch möglich, dass an jeder der Positionen der Transceiver 200 ein entsprechendes Loch vorgesehen ist. Die Transceiver 200 sind mit einer Befestigungseinrichtung 140 verbunden, welche ihrerseits mit dem Hohlleiter 110 verbunden ist. Ein schmaler Teil des Transceivers 200 ragt durch die Öffnung 112 in den Hohlraum 111 hinein. Dies ermöglicht dem Transceiver 200 elektromagnetische Wellen in den Hohlleiter 110 einzuspeisen bzw. sich in dem Hohlleiter 110 ausbreitende elektromagnetische Wellen zu empfangen.

Das Gehäuse 120 weist an einer unteren Seite eine Anschlusseinrichtung 121 für eine Stromabnehmereinrichtung auf. Die hier gezeigt Anschlusseinrichtung 121 wird durch eine Vielzahl an Ausnehmungen in dem Gehäuse 120 gebildet, welche derart angeordnet sind, dass die Vielzahl an Leiterschienen 130 durch die Ausnehmungen leicht kontaktiert werden können.

In den Fig. 4a und 4b wird nicht explizit gezeigt, wie die Transceiver 200 mit der Befestigungseinrichtung 140 verbunden sind, da es hierfür eine große Vielzahl an Möglichkeiten gibt. So können etwa Schrauben, Nieten oder Klebmittel für die Befestigung verwendet werden. Auch sind Steckverbindungen denkbar.

Die hier gezeigten Transceiver 200 sind sowohl zum Aussenden als auch zum Empfangen von elektromagnetischen Wellen ausgebildet. Bei einem elektrischen Versorgungssystem 10 ist es jedoch auch denkbar, dass einige der Transceiver 200 lediglich elektromagnetische Wellen aussenden und andere der Transceiver 200 lediglich elektromagnetische Wellen empfangen. Eine derartige Konfiguration eines elektrischen Versorgungssystems 10 mit dezidierten Sendern und Empfängern an Stelle der hier gezeigten Transceiver ist von der vorliegenden Erfindung ebenfalls umfasst, lediglich aus Gründen der Übersichtlichkeit wird eine derartige Konfiguration in dieser Anmeldung auch als Konfiguration mit mehreren Transceivern 200 bezeichnet.

Generell können die Leiterschienen einer Sammelschiene innerhalb des Gehäuses in einem Isolatormaterial eingebettet sein, insbesondere wenn das Gehäuse selbst zumindest teilweise aus einem leitenden Material gefertigt ist oder ein solches beinhaltet. Lediglich aus Gründen der Übersichtlichkeit ist in den Figuren kein solches Isolatormaterial abgebildet.

In dieser Anmeldung wurde die vorliegende Erfindung im Kontext eines Luftfahrzeuges beschreiben. Die hier beschriebenen Bauteile und Datenübertragungssysteme lassen sich jedoch in allen Bereichen einsetzen. In welchen strukturfestigende Bauteile und Datenübertragungsleitungen vorgesehen werden, insbesondere in allen Arten von Land-, Wasser- und Raumfahrzeugen.

### BEZUGSZEICHENLISTE

- 1: Luftfahrzeug
- 10: Elektrisches Versorgungssystem
- 100: Sammelschiene
- 110: Hohlleiter
- 111: Hohlraum
- 112: Öffnung
- 120: Gehäuse
- 121: Anschlusseinrichtung
- 130: Leiterschiene
- 140: Versteifungselement
- 150: Befestigungseinrichtung
- 200: Transceiver

## Patentansprüche

1. Sammelschiene (100) mit
einem Hohlleiter (110);
einem Gehäuse (120); und
einer Vielzahl an in dem Gehäuse (120) angeordneten Leiterschienen (130); wobei die Sammelschiene (100) eine längliche Form aufweist,
wobei der Hohlleiter (110) entlang der Sammelschiene (100) einen Hohlraum (111) definiert, in welchem sich elektromagnetische Wellen im Wesentlichen verlustfrei ausbreiten können, und
wobei der Hohlleiter (110) mindestens eine Öffnung (112) aufweist, durch welche der Hohlraum (111) zugänglich ist.

2. Sammelschiene (100) nach Anspruch 1, wobei der Hohlleiter (110) und/oder ein Teilbereich des Gehäuses (120) aus Metall oder einem mit Metall überzogenen Verbundbaustoff gefertigt ist.

3. Sammelschiene (100) nach einem der Ansprüche 1 oder 2, wobei mindestens eine den Hohlraum (111) definierende Wand des Hohlleiters (110) durch einen Teilbereich des Gehäuses (120) gebildet wird.

4. Sammelschiene (100) nach einem der Ansprüche 1 bis 3, wobei die mindestens eine Öffnung (112) als Schlitz ausgebildet ist, welcher sich in Längsrichtung entlang des Hohlleiters (110) erstreckt.

5. Sammelschiene (100) nach einem der Ansprüche 1 bis 4, weiterhin aufweisend ein Versteifungselement (140), welches dazu ausgebildet ist eine strukturelle Integrität einer die Sammelschiene (100) umfassenden Struktur zu verstärken.

6. Sammelschiene (100) nach einem der Ansprüche 1 bis 5, wobei das Gehäuse eine Anschlusseinrichtung (121) für eine Stromabnehmereinrichtung aufweist und der Hohlleiter (110) an einer der Anschlusseinrichtung (121) gegenüberliegenden Seite des Gehäuses (120) angeordnet ist.

7. Sammelschiene (100) nach einem der Ansprüche 1 bis 6, wobei die Sammelschiene (100) mindestens eine Befestigungseinrichtung (150) aufweist, mit welcher sich ein Transceiver (200) derart an der Sammelschiene (100) befestigen lässt, dass der Transceiver (200) elektromagnetische Wellen in den Hohlraum (111) einspeisen kann und/oder sich in dem Hohlraum (111) ausbreitende elektromagnetische Wellen empfangen kann.

8. Elektrisches Versorgungssystem (10) mit einer Sammelschiene (100) nach Anspruch 7 und einer Vielzahl an Transceivern (200), welche derart an der Sammelschiene (100) befestigt sind, dass jeder der Vielzahl an Transceivern (200) elektromagnetische Wellen in den Hohlraum (111) einspeisen kann und/oder sich in dem Hohlraum (111) ausbreitende elektromagnetische Wellen empfangen kann.

9. Luftfahrzeug (1) mit mindestens einer Sammelschiene (100) nach einem der Ansprüche 1 bis 7 oder mindestens einem elektrischen Versorgungssystem (10) nach Anspruch 8.

10. Luftfahrzeug (1) nach Anspruch 9, wobei die mindestens eine Sammelschiene (100) mit einem Rumpf, einem Kabinenboden und/oder mindestens einem Flügel des Luftfahrzeugs verbunden ist.
